# EUROPEAN PATENT APPLICATION

(11) **EP 1 022 707 A2**
(43) Date of publication of application: **26.07.2000**
(21) Application number: 00300518.8
(22) Date of filing: 25.01.2000
(51) Int. Cl.: G09B 19/18, G09B 7/04, G09B 5/14, G06F 17/30, G06F 17/60

(54) **Interactive allowance management application**

(30) Priority: 25.01.1999 US 117037 P; 03.02.1999 US 118569 P
(71) Applicant: BigChange Networks Inc., Washington, DC 20036 (US)
(72) Inventor: Clausen, Mark W., North Potomac Maryland 20878 (US); Benton, Nina P., Washington D.C. 20008 (US); Brestel, Eleanor P., Ellicott City Maryland 21043 (US)
(74) Representative: Ablett, Graham Keith

(57) **Abstract**

An allowance management program enables users to customize an activity schedule based on a business model metaphor. The users can spend monetary or non-monetary earnings at participating retail outlets and sponsor provided spending areas. Within the program, content-based messages are generated according to the particular activities to educate, inform and entertain the users. Sponsor identifiers linked with the content-based messages provide opportunity to sponsors for establishing brand name recognition.

## Description

### BACKGROUND OF THE INVENTION

The present invention relates to an interactive Internet application and, more particularly, to an Internet allowance management application for children and families incorporating active marketing integration.

Children in the 8-14 age range are rapidly becoming more savvy consumers via the Internet, and target marketing to children has become a priority for establishing brand recognition and loyalty. Children today not only have their own disposable income, but also significant family brand purchasing influence on everything from toothpaste to automobiles. Children are naturally brand conscious, and when marketers provide children with tailored information or programs that help them in their pursuit of greater independence, it can be a very effective tactic in influencing brand awareness, trial, acceptance, and loyalty.

Existing allowance-related applications are typically limited to passive forms and/or displays merely for reference or record-keeping purposes. These passive web pages lack any interactive, educational or even entertaining purpose. Moreover, a well-planned, organized and thorough allowance management program provides an opportunity for novel marketing to facilitate brand name recognition and loyalty with young users.

### SUMMARY OF THE INVENTION

An effective allowance management program for today's children is based on a premise of promoting organizational skills, entrepreneurship and personal success. In a marketing aspect, utilizing novel marketing integration scenarios serves to foster early brand awareness. By providing a completely interactive and readily customized allowance management plan along with informative and entertaining sponsor content-based messages, children will seek daily interaction with the application, thereby improving its effectiveness for children, parents and sponsors.

The allowance management program according to the invention provides marketers with the opportunity to immerse their company's brand in the daily lives of next-generation consumers. Sponsor companies are able to create a one-on-one, personalized dialogue with the audience through informational tips and incentives designed to support their brand, strategic marketing, and tactical promotional efforts.

The system also enables children to effectively manage an allowance "business," creating a customized personal allowance activity schedule that details their services, rates, etc. Parents and children together can build and negotiate aspects of the "business" while providing valuable educational information and entertainment for the children users.

In accordance with one aspect of the invention, a method of managing a child's allowance program via an interactive Internet application includes the steps of (a) creating a customized activity schedule including a plurality of services, and (b) providing the child access to information that is relevant to the plurality of services. In this context, the information is either instructional, entertaining and/or educational. Step (a) is preferably practiced by including rates corresponding to the plurality of services, respectively. The rates may correspond to non-monetary compensation. In this regard, the method may further include the step of providing access to an online shopping area that accepts the non-monetary compensation earned according to services performed. A "nag factor" effects a reduction of rates if the corresponding services are not performed according to the activity schedule. Parents may also establish an online bank account for compensation earned according to services performed. In this context, the method may further include the step of providing access to an online shopping area that is linked with the online bank account.

Step (a) may be practiced by creating an activity schedule for a parent of the child, and step (b) may be practiced by providing the child access to information relating to alternative money earning activities, separate from the plurality of services. In this context, step (b) may further be practiced by providing the child access to business forms. Step (b) may alternatively be practiced by providing the child access in information relating to special programs developed for users of the Internet application. Still further, the method may include providing access to tools that facilitate a child's management and understanding of the child's allowance program, including a calendar, a calculator, a goal calculator, and a loan calculator.

The method may further effect compiling of global information about users that use the Internet application, while providing access to the global information. This data may be compiled by at least one of user age, sex, services, zip codes, and activity rates.

In accordance with another aspect of the invention, there is provided a method of advertising for an entity within an interactive Internet application. The method includes the steps of (a) generating a content-based message according to user input via the interactive Internet application, and (b) providing an identifier linked with the content-based message corresponding to the entity. The entity may be a company, and step (b) may be practiced by providing a company logo linked with the content-based message. Step (a) may be practiced by generating factual information that is relevant to the user input. Step (a) may alternatively or additionally be practiced by generating a helpful hint that is relevant to the user input.

In one arrangement, the interactive Internet application is an allowance management application including a plurality of chores, wherein in this context, step (a) is practiced by generating information corresponding to at least one of the chores.

### BRIEF DESCRIPTION OF THE DRAWINGS

These and other aspects and advantages of the present invention will be described in detail with reference to the accompanying drawings, in which:
FIGURE 1 is a block diagram of the allowance management program according to the invention;
FIGURE 2 is an example registration display;
FIGURE 3 is an example activity selector display;
FIGURE 4 is an example schedule maker display;
FIGURE 5 is an example user company schedule display;
FIGURE 6 shows an example pop-up window incorporating marketing integration;
FIGURE 7 is an example display incorporating alternative money-earning activities;
FIGURE 8 is an example display showing an inbox configuration;
FIGURE 9 is an example display illustrating global user information; and
FIGURE 10 is a block diagram illustrating the components of a computer.

### DETAILED DESCRIPTION OF PREFERRED EMBODIMENTS

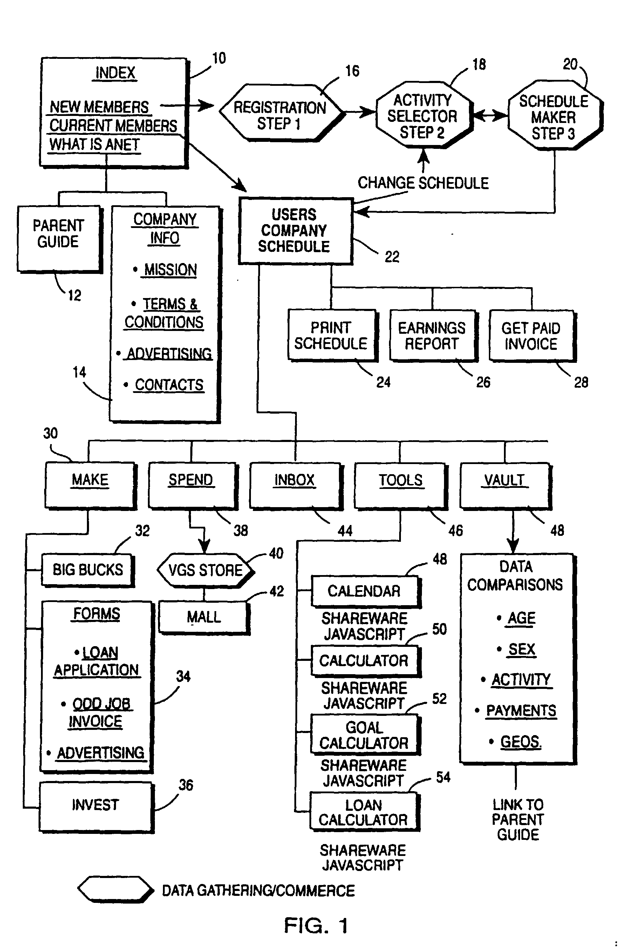

FIGURE 1 is an overview block diagram of the allowance management program according to the present invention. The allowance management system implemented in the diagram of FIGURE 1 is preferably a browser-based system in which a program running on a user's computer (the user's web browser) requests information from a server program running on a system server. The system server sends the requested data back to the browser program and the browser program then interprets and displays the data on the user's computer screen. The process is as follows:
1. The user runs a web browser program on his/her computer.
2. The user connects to the server computer (e.g., via the Internet). Connection to the server computer may be conditioned upon the correct entry of a password as is well known.
3. The user requests a page from the server computer. The user's browser sends a message to the server computer that includes (i) the transfer protocol (e.g., http://), and (ii) the address, or Uniform Allowance Locator (URL).
4. The server computer receives the user's request and retrieves the requested page, which is composed, for example, in HTML (Hypertext Markup Language).
5. The server then transmits the requested page to the user's computer.
6. The user's browser program receives the HTML text and displays its interpretation of the requested page.

Thus, the browser program on the user's computer sends requests and receives the data needed to display the HTML page on the user's computer screen. This includes the HTML file itself plus any graphic, sound and/or video files mentioned in it. Once the data is retrieved, the browser formats the data and displays the data on the user's computer screen. Helper applications, plug-ins, and enhancements such as Java™ enable the browser, among other things, to play sound and/or display video inserted in the HTML file. The fonts installed on the user's computer and the display preferences in the browser used by the user determine how the text is formatted.

Browser programs suitable for use in connection with the allowance management system of the present invention include Netscape® Navigator available from Netscape® Communications Corporation and Internet Explorer available from Microsoft® Corp.

While the detailed description contemplates that each user has a computer running a web browser, it will be appreciated that more than one user could use a particular computer terminal or that a "kiosk" at a central location (e.g., a cafeteria, a break area, etc.) with access to the system server could be provided.

It will be recognized by those in the art that various tools are readily available to create web pages for accessing data stored on a server and that such tools may be used to develop and implement the allowance management program described below and illustrated in the accompanying drawings.

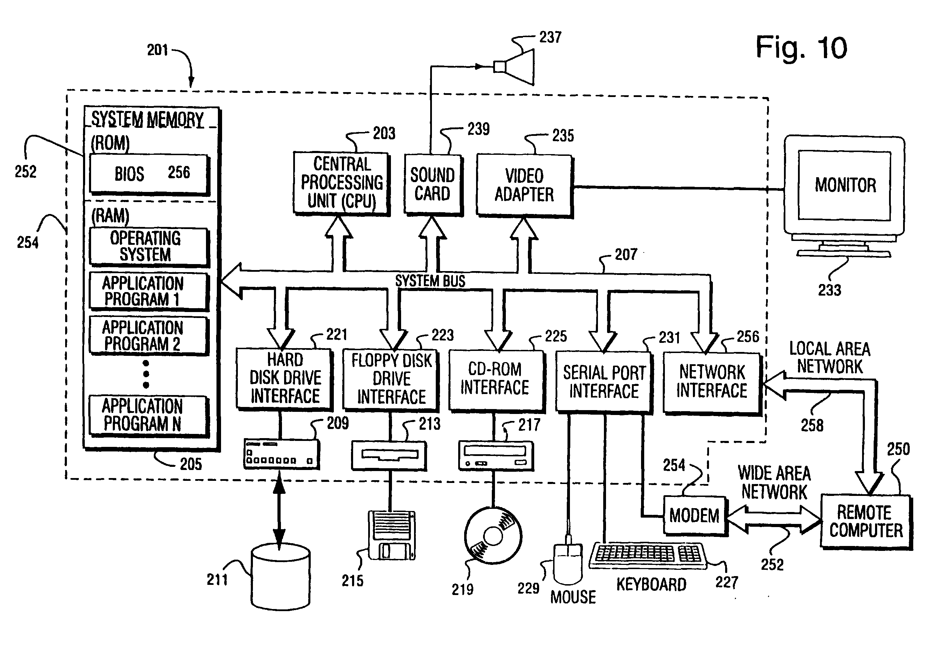

FIGURE 10 generally illustrates a computer system 201 suitable for use as the client and server components of the allowance management program. It will be appreciated that the client and server computers will run appropriate software and that the client and server computers may be somewhat differently configured with respect to the processing power of their respective processors and with respect to the amount of memory used. The computer system 201 includes a processing unit 203 and a system memory 205. A system bus 207 couples various system components including the system memory 205 to the processing unit 203. The system bus 207 may be any of several types of bus structures including a memory bus or memory controller, a peripheral bus, and a local bus using any of a variety of bus architectures. The system memory 207 includes read only memory (ROM) 252 and random access memory (RAM) 254. A basic input/output system (BIOS) 256, containing the basic routines that help to transfer information between elements within the computer system 201, such as during start-up, is stored in the ROM 252. The computer system 201 further includes various drives and associated computer-readable media. A hard disk drive 209 reads from and writes to a (typically fixed) magnetic hard disk 211; a magnetic disk drive 213 reads from and writes to a removable "floppy" or other magnetic disk 215; and an optical disk drive 217 reads from and, in some configurations, writes to a removable optical disk 219 such as a CD ROM or other optical media. The hard disk drive 209, magnetic disk drive 213, and optical disk drive 217 are connected to the system bus 207 by a hard disk drive interface 221, a magnetic disk drive interface 223, and an optical drive interface 225, respectively. The drives and their associated computer-readable media provide nonvolatile storage of computer-readable instructions, SQL-based procedures, data structures, program modules, and other data for the computer system 201. In other configurations, other types of computer-readable media that can store data that is accessible by a computer (e.g., magnetic cassettes, flash memory cards, digital video disks, Bernoulli cartridges, random access memories (RAMs), read only memories (ROMs) and the like) may also be used.

A number of program modules may be stored on the hard disk 211, removable magnetic disk 215, optical disk 219 and/or ROM 252 and/or RAM 254 of the system memory 205. Such program modules may include an operating system providing graphics and sound APIs, one or more application programs, other program modules, and program data. A user may enter commands and information into computer system 201 through input devices such as a keyboard 227 and a pointing device 229. Other input devices may include a microphone, joystick, game controller, satellite dish, scanner, or the like. These and other input devices are often connected to the processing unit 203 through a serial port interface 231 that is coupled to the system bus 207, but may be connected by other interfaces, such as a parallel port interface or a universal serial bus (USB). A monitor 233 or other type of display device is also connected to the system bus 207 via an interface, such as a video adapter 235.

The computer system 201 may also include a modem 254 or other means for establishing communications over the wide area network 252, such as the Internet. The modem 254, which may be internal or external, is connected to the system bus 207 via the serial port interface 231. A network interface 256 may also be provided for allowing the computer system 201 to communicate with a remote computing device 250 via a local area network 258 (or such communication may be via the wide area network 252 or other communications path such as dial-up or other communications means). The computer system 201 will typically include other peripheral output devices, such as printers and other standard peripheral devices.

As will be understood by those familiar with web-based forms and screens, users may make menu selections by pointing-and-clicking using a mouse, trackball or other pointing device, or by using the TAB and ENTER keys on a keyboard. For example, menu selections may be highlighted by positioning the cursor on the selections using a mouse or by using the TAB key. The mouse may be left-clicked to select the selection or the ENTER key may be pressed. Other selection mechanisms including voice-recognition systems, touch-sensitive screens, etc. may be used, and the invention is not limited in this respect.

Referring to FIGURE 1, when a user visits the "home" page 10, the user is provided with options to select a site index or a description of the program ("What is ANET") or to follow a link either for new members or current members. The site index selection generates an index view of the program displays. As shown, by selecting "What is ANET," the user is given access to a parent guide 12 to the allowance management program and company information 14 including mission, terms and conditions, advertising, and contact.

For new member registration, the user follows a three-step registration process. Registration is where users set up their own private allowance accounts based on a "building your own business" metaphor. The basic information collected during registration allows the application to deliver information to individual account users based on user characteristics.

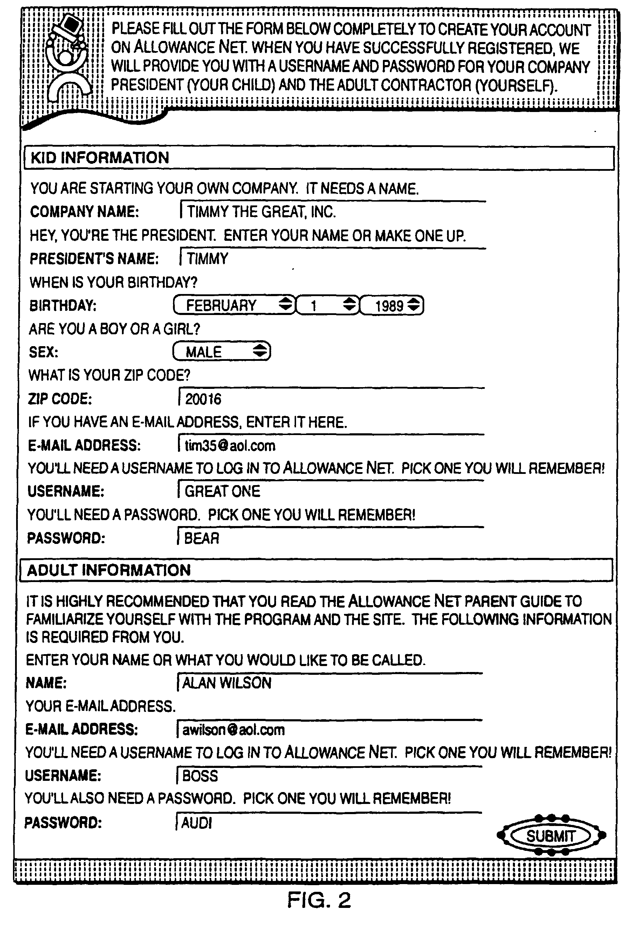

In a first registration step 16, the user is asked to enter "kid information," and a parent is asked to enter "adult information." An example registration display is shown in FIGURE 2. The information is maintained in an application database. Typical information requested for registration includes "company" name, "president's" name, child's birthday, sex and zip code, along with an e-mail address, user name and password. Typical adult information includes name and e-mail address along with a user name and password.

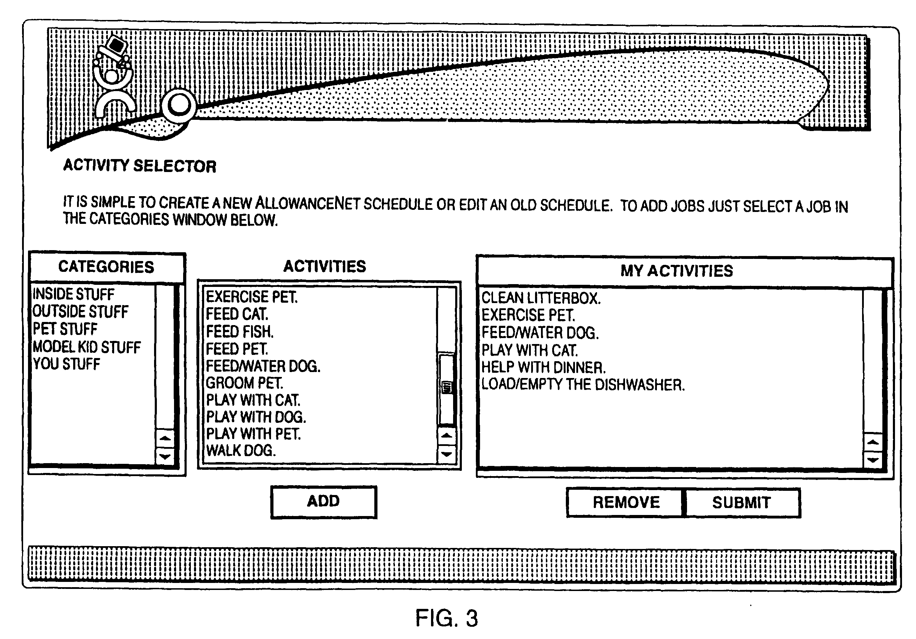

The activity selector area 18 is the first stage to letting users build their own activity schedule, During this stage, users select single allowance activities from broader activity categories. Users add/remove activities as they build their personal allowance schedule. An example of the activity selector display is shown in FIGURE 3. The categories and corresponding activities are preselected to be readily understandable by the users and to incorporate as many conceivable chores, services, behavior situations, etc., as possible. A customized schedule of activities can thus be selected by browsing the categories and corresponding activities.

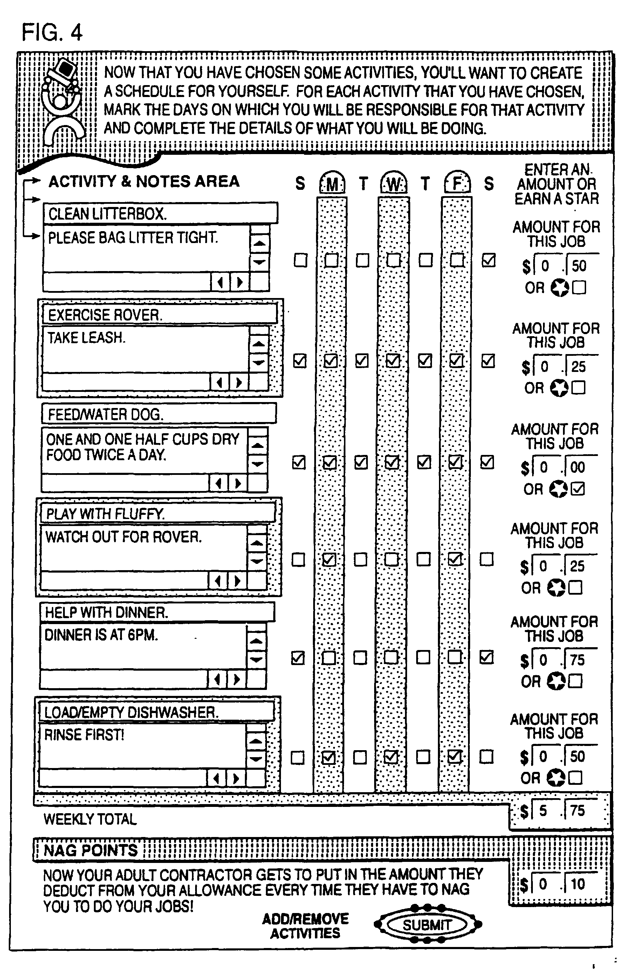

When the user is finished selecting activities, the process proceeds to the next step of the registration for generating an activity schedule 20. The schedule maker gives the user the opportunity to select the days during which they will perform their allowance activities. The activities can be customized, for example by changing "Play With Dog" to "Play with Rover!". FIGURE 4 is an example schedule maker display, wherein the user indicates when each selected activity will be performed along with respective rates corresponding to each activity.

With continued reference to FIGURE 4, the rates for services can be expressed as monetary compensation such as an amount per activity or as some form of non-monetary compensation or "virtual money." The administration of monetary and non-monetary compensation will be discussed below. The non-monetary compensation gives parents the option of rewarding activities with value that is not money, which kids can collect and redeem. Payment specifics are maintained in the application database where individual amounts against either/both currency types are added or subtracted daily based on individual activity completion and spending. A notes area for each activity enables the users to incorporate reminders and the like with each activity for future reference.

A "nag factor" can also be incorporated into the schedule, effecting a rate reduction when services are not performed according to the activity schedule. The nag factor is designed to give parents a valuable tool to teach kids the importance of maintaining their commitments and that failure to do so can have consequences. Parents set a monetary amount that is deducted from their child's allowance based against the number of times they have to "nag" their kids to complete their activities.

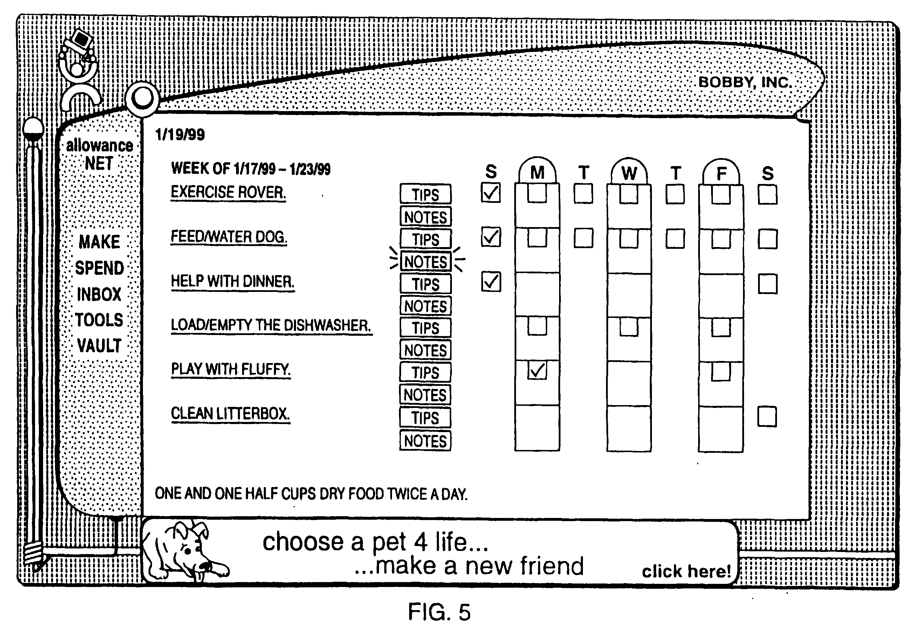

When the registration process is complete, the user' s customized "company" schedule 22 is displayed, an example of which is shown in FIGURE 5.

At the home page 10, current members log in using their user name and password to bypass the registration process directly to the main schedule display 22. From this page, users can generate numerous reports and printouts 24, 26, 28 or update their allowance schedules, make activity, scheduling, notes and payment changes, are able to process payments, and view earnings, reminder notes and sponsored activity tips. The notes correspond to the notes entered via the schedule maker 20 relating to each activity. In FIGURE 5, the notes section for the Feed/Water dog activity is highlighted, and the corresponding note is displayed at the bottom of the screen

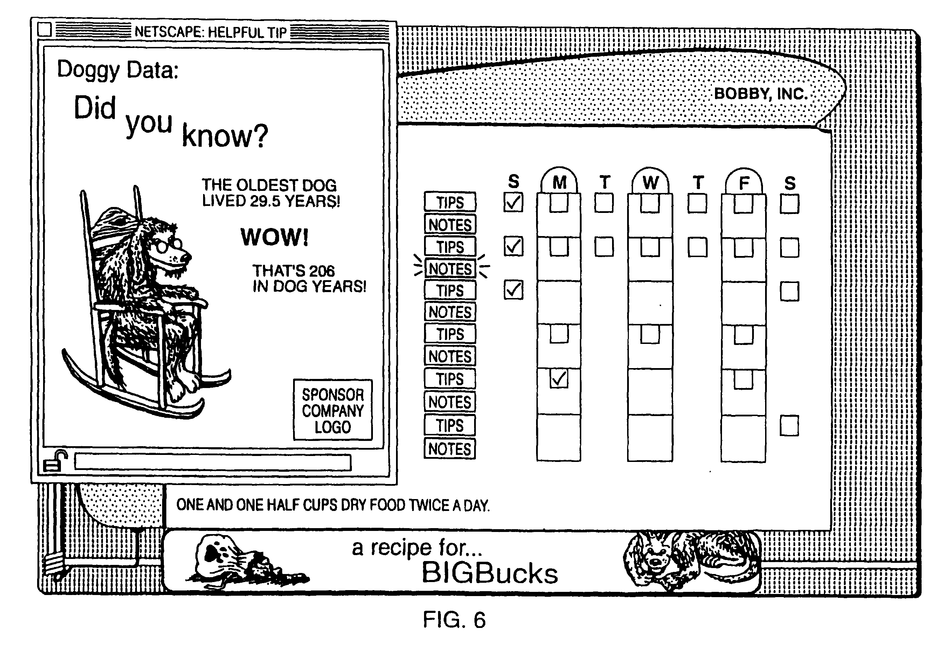

The activity tips are pop-up windows of sponsored content designed to enhance each allowance activity. Sponsor information is typically strictly instructional, entertaining or educational, giving kids the opportunity to become experts and have fun with the services they are providing. These content-based messages or "helpful tips" are correlated with the specific selected activities so that the displayed message is relevant to the particular activity. For example, with reference to FIGURE 6, if the selected activity or chore relates to feeding or exercising a pet, the message may relate to feeding guidelines for pets of various sizes or types, tips for grooming or otherwise caring for pets, or fun facts about pets or animals in general. The information for the content-based messages is supplied by or sponsored by a program sponsor. A program sponsor identifier, such as a sponsor company logo, is linked with the content-based message, providing an advertising opportunity for the sponsors. Such subtle placement of sponsor company logos and the like serves to establish brand recognition with the users. The displayed logo may or may not serve as a link to a website of the sponsor company.

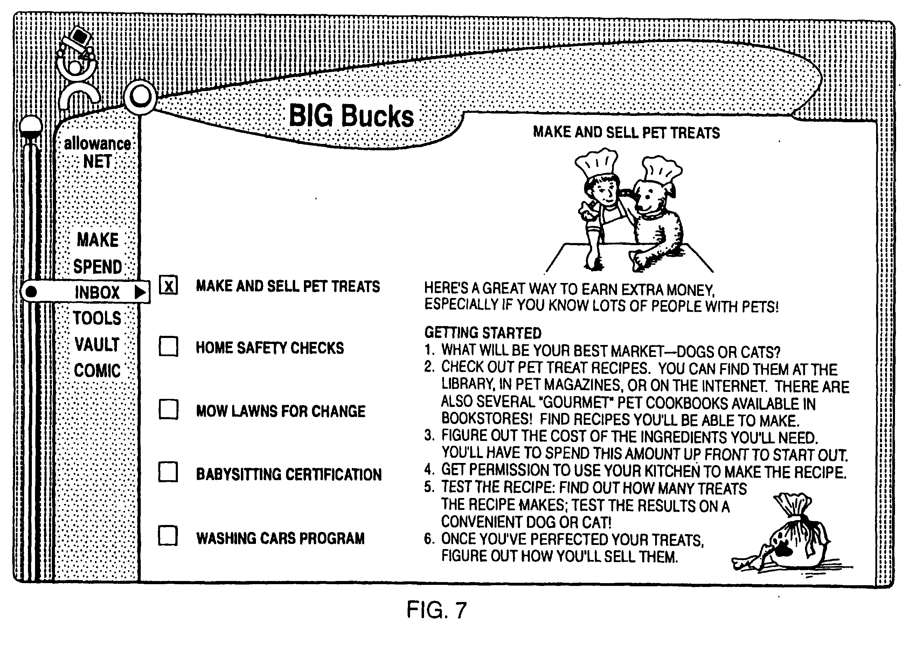

The MAKE area 30 includes a "BigBucks" area 32 where the users can get ideas, information and programs designed to show them new ways to earn money. An example BigBucks display is shown in FIGURE 7. This area 32 provides another opportunity for marketing integration via sponsored information displays. The user may also access miscellaneous business forms in the forms area 34, including, for example, odd job invoices for non-routine jobs performed, loan contracts for borrowing money, and the like.

The SPEND area 38 is an area where the users can spend earned compensation, either real money or virtual money. If parents elect to reward kids with real money compensation for activities performed, parents are provided an opportunity to open an online debit account for their kids. A child's allowance can be paid online by a parent using a credit card to "purchase" a virtual allowance debit card worth an amount of their own choosing. Money is then processed in a series of steps from the credit card company to the program provider bank/partner and updated on the secure individual debit database. Purchases made online are verified against the debit database with the provider bank/partner transferring the amounts to the online retailer. The online mall 42 includes links to online retail debit partners.

The user may also access the virtual money store 40, where users can spend virtual money on products, samples and programs provided by sponsors. The virtual money store 40 is configured like an ordinary online retail website, however accepting virtual money as payment. As items are purchased, the user's virtual money account is debited.

The INVEST area 36 contains products and services from the provider bank/partners that allow the users to save or invest their allowance earnings in a variety of financial packages, including, for example, brokerage accounts, savings accounts, education funds, etc.

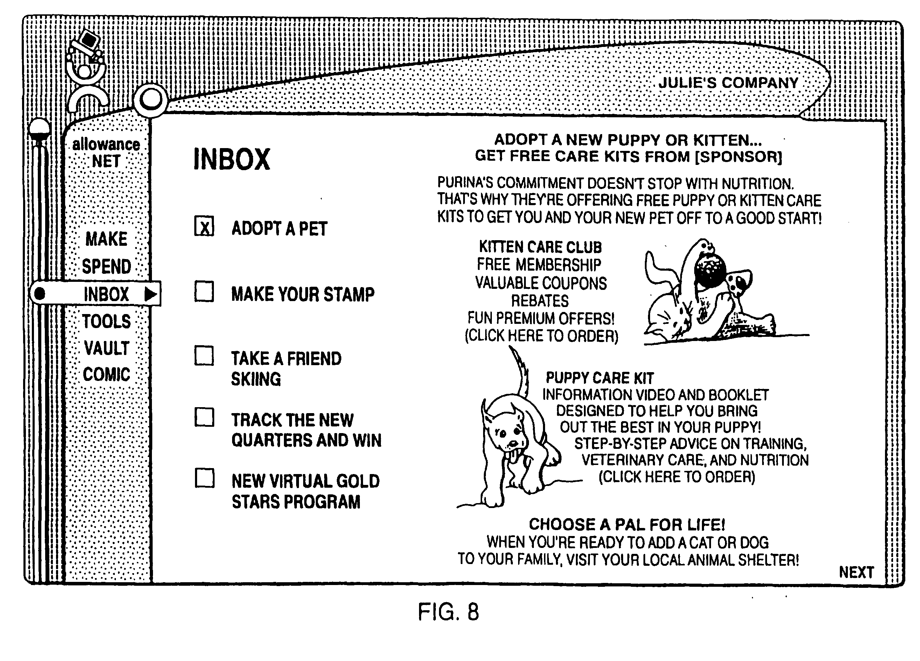

The INBOX area 44 provides a personalized area where users receive monthly information about special programs developed for the program user community. The programs are informational or educational in nature, and are designed to foster greater initiative, participation and learning. An example INBOX display is shown in FiGURE 8, showing sponsor provided special programs relating to pets.

A TOOLS area 46 provides basic organizational tools that facilitate a child's management and understanding of the allowance program. The tools include, for example, a calendar 48, a basic math calculator 50, a goal calculator 52, and a loan calculator 54. The goal calculator 52 allows each user to enter the cost of an item they are saving to buy, and it calculates how many weeks they need to save their allowance in order to buy the item. The goal calculator also makes recommendations on money-making activities they can add to their allowance schedule, based on the activities of other kids in theft age group and geography, to earn the money they need faster. The loan calculator 54 incorporates loan amounts, payment terms and the like to educate users about the cost of money. Once relevant information is input, the loan calculator 54 can determine the amount of monthly payments, total cost to borrower, etc.

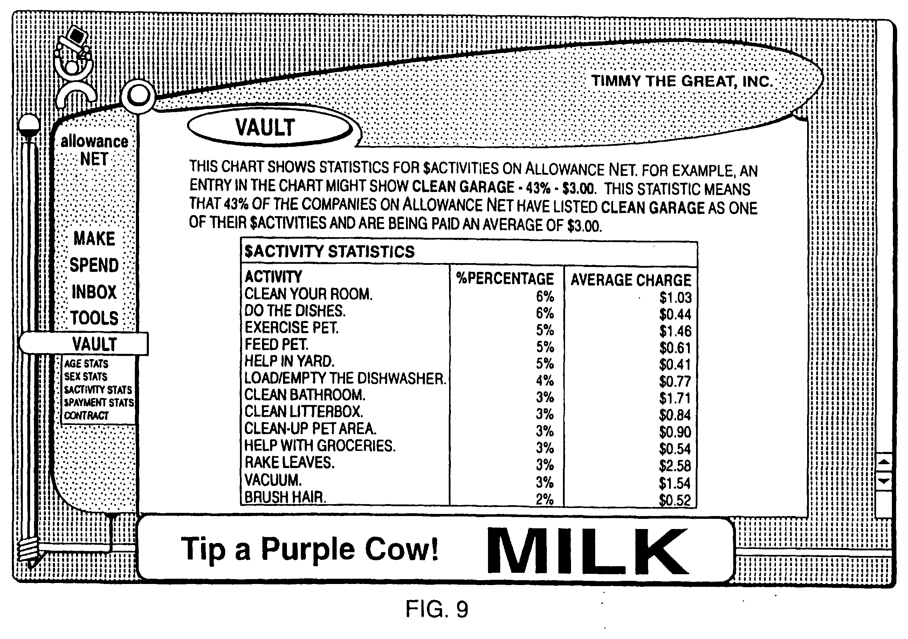

In a VAULT area 48, with reference to FIGURE 9, users can access global information about other users. Data is compiled by user age, sex, services, zip codes and activity rates and the like. The information displayed can show what percentage of users list a certain activity as part of their customized schedule along with an average compensation rate for performing that activity. The lists can be limited using any one of the compiled data as criteria.

With the interactive allowance management program according to the present invention, users can be educated and entertained and provided with incentives for completing chores while learning aspects of managing a business. Additionally, sponsors are provided with advertising opportunities for establishing early name brand recognition.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A method of advertising for an entity within an interactive Internet application, the method comprising;
(a) generating a content-based message according to user input via the interactive Internet application; and
(b) providing an identifier linked with the content-based message corresponding to the entity.

2. A method according to claim 1, wherein the entity is a company, and wherein step (b) is practiced by providing a company logo linked with the content-based message.

3. A method according to claim 1, wherein step (a) is practiced by generating factual information that is relevant to the user input.

4. A method according to claim 1, wherein step (a) is practiced by generating a helpful hint that is relevant to the user input.

5. A method according to claim 1, wherein the interactive Internet application is an allowance management application including a plurality of chores, and wherein step (a) is practiced by generating information corresponding to at least one of the chores.

6. A method of managing a child's allowance program via an interactive Internet application, the method comprising:
(a) creating a customized activity schedule including a plurality of services; and
(b) providing the child access to information that is relevant to the plurality of services, the information being at least one of instructional, entertaining or educational.

7. A method according to claim 6, wherein step (a) is practiced by including rates corresponding to the plurality of services, respectively.

8. A method according to claim 7, wherein the rates correspond to non-monetary compensation.

9. A method according to claim 8, further comprising (c) providing access to an online shopping area that accepts the non-monetary compensation earned according to services performed.

10. A method according to claim 7, further comprising (d) reducing the rates if the corresponding services are not performed according to the activity schedule.

11. A method according to claim 7, further comprising (e) establishing an online bank account for compensation earned according to services performed.

12. A method according to claim 11, further comprising (f) providing access to an online shopping area that is linked with the online bank account.

13. A method according to claim 6, wherein step (a) is practiced by creating an activity schedule for a parent of the child.

14. A method according to claim 6, wherein step (b) is practiced by providing the child access to information relating to alternative money earning activities, separate from the plurality of services.

15. A method according to claim 14, wherein step (b) is further practiced by providing the child access to business forms.

16. A method according to claim 6, wherein step (b) is practiced by providing the child access to information relating to special programs developed for users of the Internet application.

17. A method according to claim 6, further comprising (g) providing access to tools that facilitate a child' s management and understanding of the child's allowance program.

18. A method according to claim 17, wherein step (g) is practiced by providing access to at least one of a calendar, a calculator, a goal calculator, and a loan calculator.

19. A method according to claim 6, further comprising (h) compiling global information about users that use the Internet application, and (i) providing access to the global information.

20. A method according to claim 19, wherein step (h) is practiced by compiling data by at least one of user age, sex, services, ZIP codes, and activity rates.
